# EUROPEAN PATENT SPECIFICATION

(11) **EP 3 348 603 B1**
(45) Date of publication and mention of the grant of the patent: **17.02.2021**
(21) Application number: 16844188.9
(22) Date of filing: 25.08.2016
(51) Int. Cl.: C08J 5/06, C08J 5/24

(54) **HEAT-COMPRESSION-MOLDING MOLDING MATERIAL, MOLDED PRODUCT IN WHICH SAME IS USED, AND METHOD FOR MANUFACTURING SAME**
WARMPRESSMASSENFORMMATERIAL, GEFORMTES PRODUKT MIT VERWENDUNG DAVON UND VERFAHREN ZUR HERSTELLUNG DAVON
MATÉRIAU DE MOULAGE POUR MOULAGE PAR COMPRESSION THERMIQUE, PRODUIT MOULÉ DANS LEQUEL CELUI-CI EST UTILISÉ, ET SON PROCÉDÉ DE FABRICATION

(30) Priority: 07.09.2015 JP 2015175790
(43) Date of publication of application: 18.07.2018
(73) Proprietor: DIC Corporation, Tokyo 174-8520 (JP)
(72) Inventor: TAKAISHI Shiori, Takaishi-shi Osaka 592-0001 (JP); SAWADA Hidetsugu, Takaishi-shi Osaka 592-0001 (JP); KANOU Tatsuo, Takaishi-shi Osaka 592-0001 (JP)
(74) Representative: Adam, Holger
(86) International application number: PCT/JP2016/074801
(87) International publication number: WO 2017/043325

(56) References cited:
- JP-A- S57 100 114
- JP-A- S63 135 430
- JP-A- 2004 169 225
- JP-A- 2005 247 879
- JP-A- 2007 016 121
- JP-A- 2008 069 474
- JP-A- 2008 174 605
- JP-A- 2013 053 266
- JANGKYO KIM ET AL: "Effects of interfacial coating and temperature on the fracture behaviours of unidirectional Kevlar and carbon fibre reinforced epoxy resin composites", JOURNAL OF MATERIALS SCIENCE, vol. 26, no. 17, 1 September 1991 (1991-09-01), pages 4702-4720, XP055592370, Dordrecht ISSN: 0022-2461, DOI: 10.1007/BF00612409
- F. VAUTARD ET AL: "Properties of thermo-chemically surface treated carbon fibers and of their epoxy and vinyl ester composites", COMPOSITES PART A: APPLIED SCIENCE AND MANUFACTURING, vol. 43, no. 7, 1 July 2012 (2012-07-01), pages 1120-1133, XP055592390, AMSTERDAM, NL ISSN: 1359-835X, DOI: 10.1016/j.compositesa.2012.02.018

## Description

### Technical Field

The present invention relates to a carbon-fiber-reinforced plastic molding material, a sheet-molding compound, or a bulk-molding compound that can be thickened by a urethane formation reaction between hydroxy groups and isocyanate groups in a resin composition, that has excellent film releasability, that has excellent thermocompression moldability in a mold with shear edges, and that produces a high-strength molded body, to a molded article of the same, and to a method for producing the same.

### Background Art

In general, molding materials in which unsaturated polyester resins are used as matrix resins, sheet-like molding materials so-called sheet-molding compounds, and bulk-like molding materials so-called bulk-molding compounds have been widely used for homebuilding members, automobile parts, electric parts, and the like.

The sheet-molding compound is produced as a sheet-like molding material having excellent handleability by interposing a fiber-reinforcing material composed of glass fibers, carbon fibers, or the like between two resin compound layers in which a carrier film is coated with a predetermined thickness of liquid resin compound composed of a matrix resin, an inorganic filler, a curing agent, a thickener, and other additives by a doctor knife method or the like, impregnating the fiber-reinforcing material with the resin compound, and thickening the resin (conversion to B-stage). It is required that the sheet-like resin compound be liquid when applied to the carrier film so as to have a predetermined thickness and the viscosity be increased after the fiber-reinforcing material is impregnated with the resin compound. In this regard, these sheet-like molding materials may be called prepregs.

Meanwhile, regarding the bulk-molding compound, the bulk-like molding material is produced by mixing a matrix resin, an inorganic filler, a curing agent, a thickener, and a relatively short-fiber-reinforcing material called chopped strands with a kneader or the like and performing thickening.

In addition, the molding method is a pressure thermocompression molding in which a molded article is produced by shaping a molding material in a mold with shear edges at 110°C to 180°C and a pressure of 1 to 20 MPa and maintaining these molding conditions for a predetermined time. The predetermined maintenance time is about 1 to 2 minutes per millimeter of molded article thickness depending on the curing characteristics of the material. For example, the maintenance time is 3 to 6 minutes in general when the molded article thickness is 3 mm.

However, the above-described unsaturated polyester resin has disadvantages that molding shrinkage is large, fatigue resistance characteristics are poor, and thermal characteristics at high temperatures are poor. Meanwhile, when carbon fibers are used as the fiber-reinforcing material, interfacial adhesiveness between the unsaturated polyester resin and the carbon fibers is insufficient. Therefore, a molding material in which an epoxy resin having the above-described properties is used as a matrix resin has been investigated.

The method for molding these epoxy molding material is mainly an autoclave molding method. That is, the molding material is shaped by heating and pressurization. However, this molding method has disadvantages that a long curing time of 30 minutes to 2 hours is required at a temperature of about 110°C to 180°C and the degree of flexibility in the shape resulting from pressurization is low compared with the pressure thermocompression molding method. Then, a technology, in which a molded article having a thickness of 2.2 mm is produced by the pressure thermocompression molding method at a temperature of 140°C, at a pressure of 8 MPa, and for a molding time of 5 minutes, has been proposed (refer to, for example, Patent Literature 1) as a technology of molding an epoxy molding material in a relatively short time in the pressure thermocompression molding method.

A molding material composed of a bisphenol A type epoxy resin and an amine compound is conjectured to be a molding material having insufficient curing characteristics and insufficient handleability because, regarding the curing characteristics, the curability is still inferior to the curability of the sheet-molding compound in which the above-described unsaturated polyester resin is used as a matrix resin and there is no description on conversion to B-stage.

Resin compositions containing an alicyclic epoxy resin and an onium-salt-based thermal cationic polymerization initiator has been proposed (refer to, for example, Patent Literatures 2 and 3) so as to improve the curability problem of the epoxy resin. Also, a molding material partly containing an alicyclic epoxy resin has been proposed (refer to, for example, Patent Literature 4) as a molding material for a pressure thermocompression molding method, and an epoxy prepreg having excellent curability at low temperatures of 100°C or lower is described.

However, a molded article of an epoxy molding material that is produced by shaping a molding material in a mold with shear edges at 110°C to 180°C and a pressure of 1 to 20 MPa and by performing curing for 1 to 2 minutes per millimeter of molded article thickness is not known previously.

In order to solve the above-described problems, a molding material for thermocompression molding has been proposed, the molding material being produced by using an alicyclic epoxy resin and an epoxy resin of bisphenol A type or the like in combination and by impregnating a carbon fiber-reinforcing material with a resin composition containing an onium-salt-based thermal cationic polymerization initiator (for example, Patent Literature 5).

However, in the molded article produced from the above-described molding material for thermocompression molding, portions having poor mechanical strength are partly included. Therefore, there are problems in that, for example, the amount of carbon fibers has to be increased and it is difficult to address a complex shape. Accordingly, a molding material for thermocompression molding that can produce a molded article having uniform mechanical strength has been required.
Patent Literature 1: Japanese Unexamined Patent Application Publication No. 2004-338270
Patent Literature 2: Japanese Unexamined Patent Application Publication No. 3-017101
Patent Literature 3: Japanese Unexamined Patent Application Publication No. 3-059001
Patent Literature 4: Japanese Unexamined Patent Application Publication No. 2000-297141
Patent Literature 5: Japanese Unexamined Patent Application Publication No. 2007-270136

### Summary of Invention

### Technical Problem

An issue to be addressed by the present invention is the provision of a molding material for thermocompression molding that can produce, in a short time, a carbon-fiber-reinforced molded plastic article having uniform mechanical strength, a molded article produced by using the same, and a method for producing the same.

### Solution to Problem

In order to solve the above-described problems, the present inventors performed intensive researches. As a result, it was found that a molding material for thermocompression molding including a resin composition which contained a poly(meth)acrylate compound having hydroxy groups, a radical-polymerizable diluent, a polyisocyanate compound, a styrene-based elastomer having unsaturated double bonds, and a polymerization initiator and a carbon-fiber-reinforcing material composed of carbon paper surface-treated with a water-soluble resin having hydroxy groups could produce a higher-strength molded article having uniform mechanical strength. The content of the styrene-based elastomer having unsaturated double bonds is as defined in claim 1. consequently, the present invention was realized.

That is, the present invention relates to a molding material for thermocompression molding including resin composition (A) and carbon-fiber-reinforcing material (B), wherein resin composition (A) contains poly(meth)acrylate compound (a1) having hydroxy groups, radical-polymerizable diluent (a2), polyisocyanate compound (a3), styrene-based elastomer having unsaturated double bonds (a4), and polymerization initiator (a5), and carbon-fiber-reinforcing material (B) is carbon paper surface-treated with water-soluble resin (b1) having hydroxy groups.

In addition, the present invention relates to a molded article of the above-described molding material for thermocompression molding and to a method for producing a molded article including the step of thermocompression-molding the above-described molding material for thermocompression molding in a mold at 110°C to 180°C.

### Advantageous Effects of Invention

The molding material for thermocompression molding according to the present invention is suitable for homebuilding members, automobile parts, electric parts, civil engineering construction materials, and the like because high-strength molded articles having uniform mechanical strength can be produced.

### Description of Embodiments

A molding material for thermocompression molding according to the present invention includes resin composition (A) and carbon-fiber-reinforcing material (B), wherein resin composition (A) contains poly(meth)acrylate compound (a1) having hydroxy groups, radical-polymerizable diluent (a2), polyisocyanate compound (a3), styrene-based elastomer having unsaturated double bonds (a4), and polymerization initiator (a5), and carbon-fiber-reinforcing material (B) is carbon paper surface-treated with water-soluble resin (b1) having hydroxy groups.

Initially, resin composition (A) will be described. Resin composition (A) contains poly(meth)acrylate compound (a1) having hydroxy groups, radical-polymerizable diluent (a2), polyisocyanate compound (a3), styrene-based elastomer (a4) having unsaturated double bonds, and polymerization initiator (a5).

Poly(meth)acrylate compound (a1) having hydroxy groups has at least two (meth)acryloyl groups and at least one hydroxy group in a molecule. Examples of poly(meth)acrylate compound (a1) having hydroxy groups include a vinyl ester resin produced by acrylating an epoxy portion of an epoxy resin, pentaerythritol triacrylate (PETA), and dipentaerythritol pentaacrylate (modified DPHA). In particular, a vinyl ester resin produced by a reaction between an epoxy resin and an unsaturated monobasic acid is preferable because the thickening property due to a urethane formation reaction with an isocyanate compound is readily controlled. In this regard, poly(meth)acrylate compounds (a1) having hydroxy groups may be used alone, or at least two types may be used in combination.

Examples of the above-described epoxy resin include bisphenol epoxy resins, e.g., bisphenol A type epoxy resins and bisphenol F type epoxy resins, novolak epoxy resins, e.g., phenol novolak epoxy resins and cresol novolak epoxy resins, glycidyl ethers of phenols such as brominated epoxy resins of these resins, glycidyl ethers of polyhydric alcohols, e.g., dipropylene glycol diglycidyl ether, trimethylol propane triglycidyl ether, diglycidyl ethers of alkylene oxide adducts of bisphenol A, and diglycidyl ethers of hydrogenated bisphenol A, alicyclic epoxy resins, e.g., 3, 4-epoxy-6-methylcyclohexylmethyl-3,4-epoxy-6-methylcyclohexane carboxylate and 1-epoxyethyl-3,4-epoxycyclohexane, glycidyl esters, e.g., phthalic acid diglycidyl ester, tetrahydrophthalic acid diglycidyl ester, diglycidyl-p-oxybenzoic acid, and dimer acid glycidyl ester, glycidylamines, e.g., tetraglycidylaminodiphenylmethane, tetraglycidyl-m-xylenediamine, triglycidyl-p-aminophenol, and N,N-diglycidylaniline, and heterocyclic epoxy resins, e.g., 1,3-diglycidyl-5,5-dimethylhydantoin and triglycidyl isocyanurate. In this regard, these epoxy resins may be used alone, or at least two types may be used in combination.

Examples of the above-described unsaturated monobasic acid include acrylic acid, methacrylic acid, crotonic acid, cinnamic acid, acrylic acid dimer, monomethylmalate, monomethyl fumarate, monocyclohexyl fumarate, and sorbic acid. These unsaturated monobasic acids may be used alone, or at least two types may be used in combination.

Further, the resulting vinyl ester resin may be modified with an acid anhydride, e.g., maleic anhydride or succinic anhydride, or an isocyanate compound, e.g., toluene diisocyanate or isopropenyl-dimethyl-benzyl isocyanate.

Examples of radical-polymerizable diluent (a2) described above include vinyl monomers, e.g., styrene and α-methyl styrene; and (meth)acrylic acid ester monomers, e.g., methyl (meth)acrylate and butyl (meth)acrylate. In this regard, radical-polymerizable diluents (a2) may be used alone, or at least two types may be used in combination.

There is no particular limitation regarding the amount of radical-polymerizable diluent (a2) added, and the amount may be appropriately adjusted for the purpose of adjusting the viscosity of resin composition (A). The amount is preferably within the range of 50 to 150 parts by mass, and more preferably within the range of 80 to 120 parts by mass relative to 100 parts by mass of poly(meth)acrylate compound (a1) having hydroxy groups because molding materials for thermocompression molding, e.g., sheet-molding compounds, are readily produced and, in addition, excellent curing reactivity at high temperatures is exhibited.

Examples of polyisocyanate compound (a3) include diphenylmethane diisocyanate (MDI), tolylene diisocyanate (TDI), xylylene diisocyanate (XDI), hexamethylene diisocyanate (HDI), isophorone diisocyanate (IPDI), polymeric MDI, and hydrogenated MDI. In this regard, polyisocyanate compounds (a3) may be used alone, or at least two types may be used in combination.

Examples of styrene-based elastomer having unsaturated double bonds (a4) include styrene-butadiene copolymers, styrene-butadiene block copolymers, styrene-butadiene-styrene block copolymers, styrene-isoprene copolymers, styrene-isoprene block copolymers, styrene-isoprene-styrene block copolymers, styrene-isoprene-butadiene copolymers, styrene-isoprene-butadiene-styrene copolymers, styrene-butadiene-(meth)acrylic acid copolymers, and styrene-butadiene-(meth)acrylic acid ester copolymers. Most of all, styrene-butadiene block copolymers or styrene-butadiene-styrene block copolymers are preferable. In particular, the copolymers having a butadiene content of 50% by mass or more are more preferable because the resulting molded bodies have excellent strength. In this regard, styrene-based elastomers having unsaturated double bonds (a4) may be used alone, or at least two types may be used in combination.

There is no particular limitation regarding polymerization initiator (a5), and organic peroxides are preferable. Examples thereof include diacyl peroxide compounds, peroxy ester compounds, hydroperoxide compounds, ketone peroxide compounds, alkyl perester compounds, and percarbonate compounds, and the polymerization initiators can be appropriately selected in accordance with the molding condition. These polymerization initiators may be used alone, or at least two types may be used in combination.

Meanwhile, resin composition (A) may also contain an oligomer, a polymer, and the like that have radical-polymerizable double bonds as components other than poly(meth)acrylate compound (a1) having hydroxy groups, radical-polymerizable diluent (a2), polyisocyanate compound (a3), styrene-based elastomer (a4) having unsaturated double bonds, and polymerization initiator (a5). Examples of the other components include vinyl monomers, e.g., styrene, α-methyl styrene, chlorostyrene, divinylbenzene, t-butyl styrene, vinyltoluene, vinyl acetate, diaryl phthalate, and triaryl cyanurate, polymers of (meth)acrylic acid, (meth)acrylic acid esters, phthalic acid (anhydride), or the like, unsaturated polyester resins, and urethane acrylate resins.

The molar ratio (NCO/OH) of isocyanate groups (NCO) in the polyisocyanate compound (a3) to hydroxy groups (OH) in the poly(meth)acrylate compound (a1) having hydroxy groups is preferably within the range of 0.1 to 1 because workability and moldability of the molding material according to the present invention and strength of the molded article are further enhanced. If the molar ratio is less than the above-described range, the thickening reaction may be insufficient, and the workability of the resulting molding material may be excessively flexible so as to degrade the workability. If the molar ratio is more than the above-described range, polyisocyanate compound (a3) may be excessive and coloring due to a side reaction or degradation in the strength may occur. The molar ratio is more preferably within the range of 0.2 to 0.8 for the above-described reason.

The content of styrene-based elastomer (a4) having unsaturated double bonds in resin composition (A) is preferably within the range of 0.1 to 3.0 parts by mass, and more preferably within the range of 0.5 to 1.5 parts by mass relative to 100 parts by mass of a total amount of poly(meth)acrylate compound (a1) having hydroxy groups, radical-polymerizable diluent (a2), and polyisocyanate compound (a3) because the strength of the resulting molded article is further enhanced.

There is no particular limitation regarding the content of polymerization initiator (a5) in resin composition (A) as long as the content is within the range in which the object of the present invention is achieved. The content is preferably within the range of 0.3% to 3% by mass relative to 100 parts by mass of a total amount of poly(meth)acrylate compound (a1) having hydroxy groups, radical-polymerizable diluent (a2), and polyisocyanate compound (a3) because both curing characteristics and storage stability of the molding material according to the present invention are excellent.

Resin composition (A) may contain a filler as necessary because workability and moldability of the molding material for thermocompression molding according to the present invention and strength of the molded article are further enhanced. Examples of the filler include calcium carbonate, magnesium carbonate, barium sulfate, mica, talc, kaoline, clay, cerite, asbestos, barite, baryta, silica, quartz sand, dolomite limestone, gypsum, aluminum fine powder, hollow balloons, alumina, glass powder, aluminum hydroxide, white Japanese marble, zirconium oxide, antimony trioxide, titanium oxide, molybdenum dioxide, and iron powder. The amounts of these fillers added are preferably 10 to 500 parts by mass, and more preferably 30 to 300 parts by mass relative to 100 parts by mass of a total amount of poly(meth)acrylate compound having hydroxy groups (a1), radical-polymerizable diluent (a2), and polyisocyanate compound (a3).

Next, carbon-fiber-reinforcing material (B) will be described. Carbon-fiber-reinforcing material (B) is carbon paper surface-treated with water-soluble resin (b1) having hydroxy groups, and examples thereof include a material produced by dispersing short carbon fibers into an aqueous solution of water-soluble resin (b1) and performing paper making and drying.

Examples of water-soluble resin (b1) include natural polymers, e.g., starch, saccharide, agar, dextrin, cyclodextrin, and gelatin; and synthetic polymers, e.g., hydroxyethyl cellulose and polyvinyl alcohol (PVA).

Water-soluble resin (b1) has hydroxy groups in a molecular structure and generates a urethane bond with a polyisocyanate compound so as to improve the interfacial adhesiveness with a matrix resin. However, if the amount of water-soluble resin (b1) present on the carbon fiber surfaces is excessively large or excessively small, the strength of the resulting molded body may be reduced. The content of water-soluble resin (b1) in carbon-fiber-reinforcing material (B) is preferably within the range of 1% to 15% by mass and more preferably within the range of 3% to 10% by mass because the interfacial adhesiveness is further improved and the strength of the resulting molded body is further enhanced.

Preferably, the above-described carbon paper is produced by dispersing 6 to 60 mm of short carbon fibers into an aqueous solution of water-soluble resin (b1) and performing paper making in consideration of being uniformly surface-treated with water-soluble resin (b1) and the cost. If the lengths of the short carbon fibers are less than the above-described range, the strength of the molded body produced from the molding material according to the present invention becomes insufficient. If the lengths are more than the above-described range, the short carbon fibers are not readily fluidized during compression molding and, as a result, a resin-rich portion may be formed in a molded body with a complex shape having, for example, a rib and boss structure. Meanwhile, from the viewpoint of homogeneity in paper making, if the lengths of the short carbon fibers are more than 60 mm, heterogeneous paper may be produced. Therefore, more preferable range is 10 to 30 mm. Further, the unit weight of carbon-fiber-reinforcing material (B) made into the paper is preferably within the range of 50 to 1,000 g/m², more preferably within the range of 100 to 750 g/m², and further preferably within the range of 120 to 500 g/m² from the viewpoint of impregnation property with resin composition (A).

The molding material for thermocompression molding according to the present invention includes resin composition (A) and carbon-fiber-reinforcing material (B). It is preferable that carbon-fiber-reinforcing material (B) be within the range of 10% to 60% by mass relative to resin composition (A) because the strength of the resulting molded body is further enhanced.

A polymerization inhibitor may be added to the molding material for thermocompression molding according to the present invention. There is no particular limitation regarding the polymerization inhibitor. Examples thereof include hydroquinone, trimethylhydroquinone, p-t-butylcatechol, t-butylhydroquinone, toluhydroquinone, p-benzoquinone, naphthoquinone, hydroquinone monomethyl ether, phenothiazine, copper naphthenate, and copper chloride. These polymerization inhibitors may be used alone, or at least two types may be used in appropriate combination. There is no particular limitation regarding the amount of the polymerization inhibitor added, and preferably, 10 to 1,000 ppm of polymerization inhibitor may be added to the resin composition.

The molding material for thermocompression molding according to the present invention may contain a curing accelerator. Examples of the curing accelerator include metallic soaps, e.g., cobalt naphthenate, cobalt octenoate, vanadyl octenoate, copper naphthenate, and barium naphthenate, and metal chelate compounds, e.g., vanadyl acetylacetate, cobalt acetylacetate, and iron acetylacetonate. In addition, examples of amines include N,N-dimethylamino-p-benzaldehyde, N,N-dimethylaniline, N,N-diethylaniline, N,N-dimethyl-p-toluidine, N-ethyl-m-toluidine, triethanolamine, m-toluidine, diethylene triamine, pyridine, phenylmorpholine, piperidine, and diethanolaniline.

The molding material for thermocompression molding according to the present invention may contain an internal mold release agent. Examples of the internal mold release agent include zinc stearate, calcium stearate, paraffin wax, polyethylene wax, and carnauba wax. Paraffin wax, polyethylene wax, and carnauba wax are preferable.

Further, a thermoplastic resin serving as a shrinkage-reducing agent may be added to the molding material for thermocompression molding according to the present invention. Examples of the shrinkage-reducing agent include polystyrenes, styrene-acrylic acid copolymers, styrene vinyl acetate copolymers, styrene-butadiene copolymers, and styrene-poly(meth)acrylic acid ester copolymers. These cause thermal expansion or foaming when subjected to thermocompression molding at 110°C to 180°C and, thereby, the molding shrinkage of the resulting molded body can be suppressed.

Also, the molding material for thermocompression molding according to the present invention may contain other components, e.g., an ultraviolet absorber, a pigment, a thickener, a viscosity-reducing agent, an antioxidant, a plasticizer, a flame retardant, an antimicrobial agent, a stabilizer, a reinforcing material, and a photo-curing agent.

The molding material for thermocompression molding according to the present invention can be thickened and converted to B-stage by a urethane formation reaction between hydroxy groups and isocyanate groups in the resin composition. It is preferable that aging be performed within the range of ambient temperature to 50°C for 12 to 48 hours in accordance with the type of isocyanate compound (a3). Consequently, the molding material can be made into a tuck-free state. If the aging temperature is higher than 50°C, a curing reaction excessively proceeds and a molding material converted to B-stage cannot be produced. The viscosity of the molding material after being thickened is preferably 1000 Pa.s (10,000 poise) or more at 25°C, and more preferably 2000 Pa.s (20,000 poise) to 100,000 poise.

Preferably, the molding material for thermocompression molding according to the present invention is a sheet-molding compound or a bulk-molding compound because molding can be performed in a simple and easy way and even a complex shape can be excellently reproduced.

In a method for producing the sheet-molding compound, components of the resin compound are mixed and dispersed by mixing liquid components and powdered components by using a mixer, e.g., a common roll, internal mixer, planetary mixer, kneader, or extruder. There is no particular limitation regarding the order of mixing of the components. Preferably, at ambient temperature, styrene-based elastomer (a4) having unsaturated double bonds and polyisocyanate compound (a3) are added to poly(meth)acrylate compound (a1) having hydroxy groups diluted with radical-polymerizable diluent (a2) and, thereafter, dispersion is performed by using the above-described mixer. Subsequently, if necessary, an inorganic filler and the like are added and mixing and dispersion are further performed. Examples of methods for making a sheet thereafter include a lacquer method in which a fiber-reinforcing material is coated with a matrix resin solution containing a solvent, and the solvent is removed after impregnation with resin solution, a hot met method in which a resin film is formed in advance by heat-melting a matrix resin without using a solvent and is bonded to a fiber-reinforcing material such that impregnation occurs, a dipping method in which a fiber-reinforcing material is dipped into a resin solution so as to be coated with the resin solution, and a doctor knife method, where these methods have been previously used for epoxy molding materials. In the case of the present invention, in particular, the doctor knife method is preferable. The doctor knife method has been adopted for the sheet-molding compound in general.

In a method for producing the bulk-molding compound, components of the resin compound are mixed and dispersed by mixing liquid components and powdered components by using a mixer, e.g., a common roll, internal mixer, planetary mixer, kneader, or extruder. There is no particular limitation regarding the order of mixing of the components. Preferably, at ambient temperature, styrene-based elastomer (a4) having unsaturated double bonds and polyisocyanate compound (a3) are added to poly(meth)acrylate compound (a1) having hydroxy groups diluted with radical-polymerizable diluent (a2) and, thereafter, dispersion is performed by using the above-described mixer. Subsequently, if necessary, an inorganic filler and the like are added and mixing and dispersion are further performed. Thereafter, a fiber-reinforcing material is added and mixing and dispersion are performed.

In a production method used for molding the molding material according to the present invention, a predetermined amount of the molding material is weighed and put into a mold heated to 110°C to 180°C in advance, the molding material is shaped by being subjected to mold clamping by a compression molding machine, the molding material is cured by maintaining the molding pressure of 0.1 to 20 MPa and, thereafter, a molded article is taken out. In this manner, the molded article is produced. In this case, a production method in which thermocompression molding is performed in a mold with shear edges at a mold temperature of 120°C to 160°C by maintaining a molding pressure of 1 to 20 MPa for a predetermined time of 0.5 to 2 minutes per millimeter of molded article thickness is preferable.

### EXAMPLES

The present invention will be described below in further detail with reference to the examples, but the present invention is not limited to these examples.

### (Synthesis example 1: Synthesis of vinyl ester resin mixture (2))

A 2-L four-necked flask provided with nitrogen and air introduction tubes was charged with 840 parts by mass of bisphenol A type epoxy resin (epoxy equivalent of 210), 333 parts by mass of methacrylic acid, and 0.47 parts by mass of methylhydroquinone, and the temperature was increased to 90°C in circulation of gas in which nitrogen and air was mixed in a ratio of one to one. Thereafter, 2.4 parts by mass of 2-methylimidazole was put into the flask, the temperature was increased to 105°C, and a reaction was performed for 10 hours so as to produce a vinyl ester resin. Subsequently, the resulting vinyl ester resin was dissolved into 83 parts by mass of phenoxyethyl methacrylate so as to produce vinyl ester resin mixture (2) having a solid content of 60% by mass.

### (Preparation example 1: Preparation of resin composition (A-1))

Resin composition (A-1) was produced by mixing 100 parts by mass of mixture of a vinyl ester resin and styrene ("DICLITE UE-3505" produced by DIC Corporation, vinyl ester resin/styrene = 58/42 (mass ratio), hereafter abbreviated as vinyl ester resin mixture (1)), 0.9 parts by mass of styrene-butadiene block copolymer ("KRATON DX410" produced by Kraton Corporation), 13 parts by mass of polymeric MDI ("COSMONATE LL" produced by Mitsui Chemicals, Inc.), and 1 part by mass of polymerization initiator ("Kayacarbon AIC-75" produced by Kayaku Akzo Corporation, organic peroxide). The molar ratio (NCO/OH) in the resulting resin composition (A-1) was 0.46.

### (Preparation example 2: Preparation of resin composition (A-2))

Resin composition (a3) was produced in the same manner as preparation example 1 except that 60 parts by mass of calcium carbonate ("SOFTON 1200" produced by SHIRAISHI CALCIUM KAISHA, LTD.) was further added in addition to the raw materials used in preparation example 1. The molar ratio (NCO/OH) in the resulting resin composition (A-2) was 0.46.

### (Preparation example 3: Preparation of resin composition (A-3))

Resin composition (A-3) was produced in the same manner as preparation example 1 except that 100 parts by mass of calcium carbonate ("SOFTON 1200" produced by SHIRAISHI CALCIUM KAISHA, LTD.) was further added in addition to the raw materials used in preparation example 1. The molar ratio (NCO/OH) in the resulting resin composition (A-3) was 0.46.

### (Preparation example 4: Preparation of resin composition (A-4))

Resin composition (A-4) was produced in the same manner as preparation example 1 except that 150 parts by mass of calcium carbonate ("SOFTON 1200" produced by SHIRAISHI CALCIUM KAISHA, LTD.) was further added in addition to the raw materials used in preparation example 1. The molar ratio (NCO/OH) in the resulting resin composition (A-4) was 0.46.

### (Preparation example 5: Preparation of resin composition (A-5))

Resin composition (A-5) was produced by mixing 100 parts by mass of vinyl ester resin mixture (2) produced in synthesis example 1, 0.9 parts by mass of styrene-butadiene block copolymer ("KRATON DX410" produced by Kraton Corporation), 25.2 parts by mass of polymeric MDI ("COSMONATE LL" produced by Mitsui Chemicals, Inc.), 1 part by mass of polymerization initiator ("Kayacarbon AIC-75" produced by Kayaku Akzo Corporation, organic peroxide), and 100 parts by mass of calcium carbonate ("SOFTON 1200" produced by SHIRAISHI CALCIUM KAISHA, LTD.). The molar ratio (NCO/OH) in the resulting resin composition (A-5) was 0.80.

### (Preparation example 6: Preparation of resin composition (RA-1))

Resin composition (RA-1) was produced in the same manner as preparation example 1 except that 0.9 parts by mass of styrene-butadiene block copolymer ("KRATON DX410" produced by Kraton Corporation) used in preparation example 1 was not used. The molar ratio (NCO/OH) in the resulting resin composition (RA-1) was 0.46.

The compositions of resin compositions (A-1) to (A-5) and (RA-1) produced as described above are shown in Table 1.

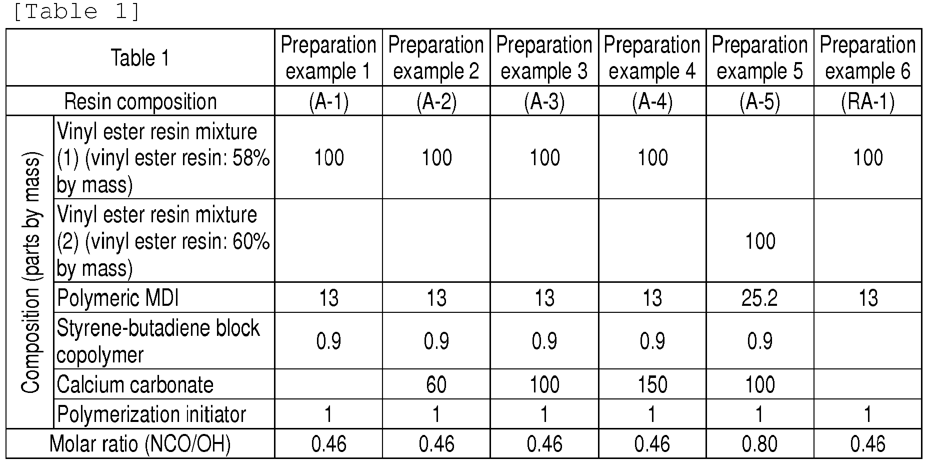

### (Example 1: Production and evaluation of molding material for thermocompression (1))

Two 30-µm polypropylene films were coated with resin composition (A-1) produced as described above so as to set the average amount of coating to be 385 g/m², carbon paper surface-treated with polyvinyl alcohol (PVA) ("CF Paper" produced by Nippon polymer Sangyo Co., Ltd., unit weight of 380 g/m², hereafter abbreviated as carbon-fiber-reinforcing material (B-1)) was interposed between the resin-coated films so as to produce a sandwich structure, impregnation was performed such that the content of carbon fibers containing the PVA surface treatment agent became 33% by mass, and a molding material for thermocompression (1) was produced as a sheet-molding compound (hereafter abbreviated as "SMC") after being left to stand for 24 hours in an oven at 45°C. In this regard, the unit weight of the resulting molding material was 1.15 kg/m². Meanwhile, the content of PVA in carbon-fiber-reinforcing material (B-1) was 5% by mass.

Then, the resulting molding material for thermocompression (1) was used and evaluation of the molded article was performed as described below.

### [Production of molded article for evaluation]

Molded article (1) was produced by cutting molding material for thermocompression (1) into a size of 100 × 290 mm, stacking four cut molding materials so as to prepare a specimen set, placing two specimen sets, which were 250 g in total, in a symmetric manner at a distance of 50 mm from each other in a plate-like mold 300 mm long by 300 mm wide by 2 mm thick, and performing thermocompression molding. Regarding the thermocompression molding condition, the mold temperature was (lower) 130°C/(upper) 145°C. The four-layer molding material was placed on a lower mold, the mold clamping pressure of 10 MPa was maintained for 4 minutes, and the molding material was taken out after mold opening and was left to stand to cool at ambient temperature. A linear portion at which two sheet-molding compound sets joined (hereafter abbreviated as a "weld portion") was formed at the central portion of molded article (1) produced by the above-described method.

### [Bending test method of molded article]

Ten test pieces (25 mm wide by 80 mm long by 2 mm thick, five test pieces in each of the longitudinal direction and lateral direction relative to the weld portion) cut from portions excluding the weld portion of molded article (1) produced as described above were subjected to a three-point bending test (gauge length of 40 mm, testing rate of 1 mm/min) in conformity with JIS K7171 so as to measure bending strength and bending modulus of elasticity. In this regard, the standard deviations were determined respectively, and variations were evaluated on the basis of the following criteria.
⊙: Standard deviation is less than 5% of average value
○: Standard deviation is 5% or more and less than 10% of average value
Δ: Standard deviation is 10% or more and less than 20% of average value
×: Standard deviation is 20% or more of average value

### [Bending test method of weld portion]

Five test pieces (25 mm wide by 80 mm long by 2 mm thick) cut from molded article (1) produced as described above such that the center of each test piece was in accord with the weld portion were subjected to a three-point bending test (gauge length of 40 mm, testing rate of 1 mm/min) in conformity with JIS K7171 so as to measure bending strength and bending modulus of elasticity.

### (Example 2: Production and evaluation of molding material for thermocompression (2))

Molding material for thermocompression (2) was produced in the same manner as example 1 except that resin composition (A-2) was used instead of resin composition (A-1) used in example 1.

In addition, a molded article was produced in the same manner as example 1 except that molding material for thermocompression (2) was used instead of molding material for thermocompression (1), and the bending strength, the bending modulus of elasticity, the bending strength of the weld portion, and the bending modulus of elasticity of the weld portion were measured.

### (Example 3: Production and evaluation of molding material for thermocompression (3))

Molding material for thermocompression (3) was produced in the same manner as example 1 except that resin composition (A-3) was used instead of resin composition (A-1) used in example 1 and impregnation was performed so as to set the content of carbon fibers containing the PVA surface treatment agent in the molding material to be 25% by mass.

In addition, a molded article was produced in the same manner as example 1 except that molding material for thermocompression (3) was used instead of molding material for thermocompression (1), and the bending strength, the bending modulus of elasticity, the bending strength of the weld portion, and the bending modulus of elasticity of the weld portion were measured.

### (Example 4: Production and evaluation of molding material for thermocompression (4))

Molding material for thermocompression (4) was produced in the same manner as example 1 except that resin composition (A-4) was used instead of resin composition (A-1) used in example 1 and impregnation was performed so as to set the content of carbon fibers containing the PVA surface treatment agent in the molding material to be 20% by mass.

In addition, a molded article was produced in the same manner as example 1 except that molding material for thermocompression (4) was used instead of molding material for thermocompression (1), and the bending strength, the bending modulus of elasticity, the bending strength of the weld portion, and the bending modulus of elasticity of the weld portion were measured.

### (Example 5: Production and evaluation of molding material for thermocompression (5))

Two 30-µm polypropylene films were coated with resin composition (A-5) produced as described above so as to set the average amount of coating to be 300 g/m², carbon paper surface-treated with polyvinyl alcohol (PVA) ("CF Paper" produced by Nippon polymer Sangyo Co., Ltd., unit weight of 200 g/m², hereafter abbreviated as carbon-fiber-reinforcing material (B-2)) was interposed between the resin-coated films so as to produce a sandwich structure, impregnation was performed such that the content of carbon fibers containing the PVA surface treatment agent became 25% by mass, and a molding material for thermocompression (5) was produced by being left to stand for 24 hours in an oven at 45°C. In this regard, the unit weight of the resulting molding material was 0.80 kg/m². Meanwhile, the content of PVA in carbon-fiber-reinforcing material (B-2) was 5% by mass.

In addition, a molded article was produced in the same manner as example 1 except that molding material for thermocompression (5) was used instead of molding material for thermocompression (1), and the bending strength, the bending modulus of elasticity, the bending strength of the weld portion, and the bending modulus of elasticity of the weld portion were measured.

### (Example 6: Production and evaluation of molding material for thermocompression (6))

Two 30-µm polypropylene films were coated with resin composition (A-5) produced as described above so as to set the average amount of coating to be 400 g/m², carbon-fiber-reinforcing material (B-2) was interposed between the resin-coated films so as to produce a sandwich structure, impregnation was performed such that the content of carbon fibers containing the PVA surface treatment agent became 20% by mass, and a molding material for thermocompression (6) was produced by being left to stand for 24 hours in an oven at 45°C. In this regard, the unit weight of the resulting molding material was 1.00 kg/m².

In addition, a molded article was produced in the same manner as example 1 except that molding material for thermocompression (6) was used instead of molding material for thermocompression (1), and the bending strength, the bending modulus of elasticity, the bending strength of the weld portion, and the bending modulus of elasticity of the weld portion were measured.

### (Comparative example 1: Production and evaluation of molding material for thermocompression (R1))

Molding material for thermocompression (R1) was produced in the same manner as example 1 except that resin composition (RA-1) was used instead of resin composition (a1) used in example 1.

In addition, a molded article was produced in the same manner as example 1 except that molding material for thermocompression (R1) was used instead of molding material for thermocompression (1), and the bending strength, the bending modulus of elasticity, the bending strength of the weld portion, and the bending modulus of elasticity of the weld portion were measured.

### (Comparative example 2: Production and evaluation of molding material for thermocompression (R2))

Two 30-µm polypropylene films were coated with resin composition (a1) produced as described above so as to set the average amount of coating to be 385 g/m², carbon fiber roving (Torayca "T700SC-12000-50C" produced by Toray Industries, Ltd., hereafter abbreviated as carbon-fiber-reinforcing material (RB-1)) cut into 1 inch (25.4 mm) was dispersed uniformly as long as possible on the resin of one resin-coated film and was covered with another resin-coated film so as to produce a sandwich structure, impregnation was performed such that the content of carbon fibers became 33% by mass, and a molding material for thermocompression (R2) (sheet-molding compound) was produced by being left to stand for 24 hours in an oven at 45°C.

The evaluation results of molding materials for thermocompression (1) to (6), (R1), and (R2) produced as described above are shown in Table 2.

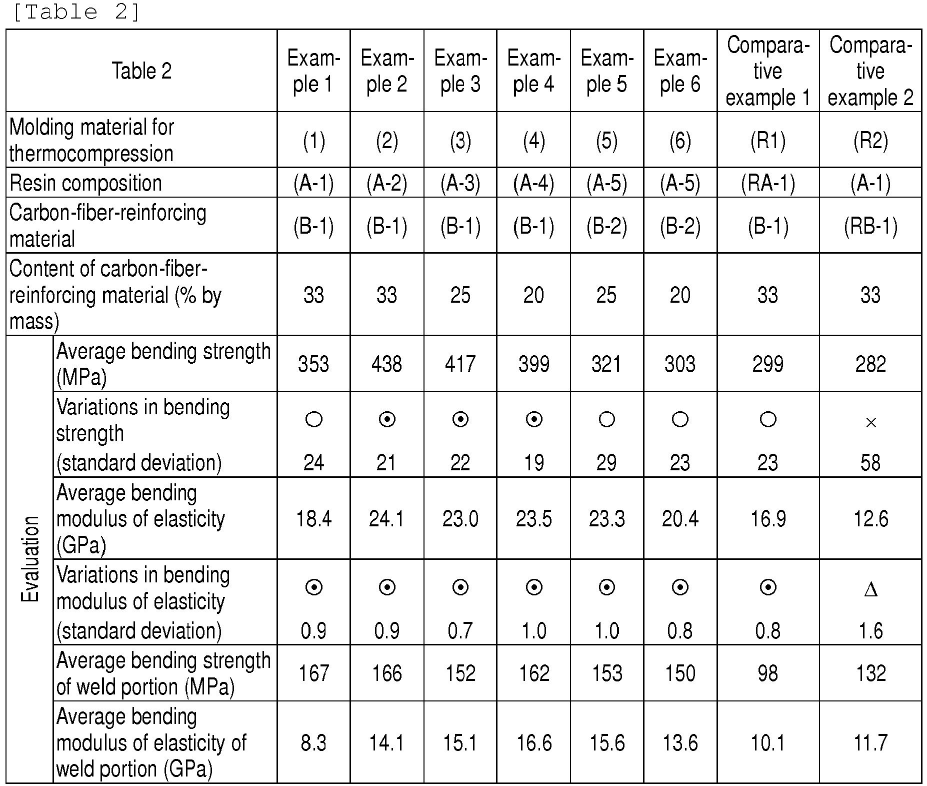

It was ascertained that the molded articles (1) produced from the molding materials for thermocompression in examples 1 to 6 according to the present invention had high bending strength and high bending modulus of elasticity. It was also ascertained that the standard deviations were small and variations were within a small range. Further, it was ascertained that the weld portions of the molded articles also had high bending strength and high bending modulus of elasticity.

On the other hand, comparative example 1 is an example in which no styrene-based elastomer having unsaturated double bonds was included in the resin composition, and it was ascertained that the bending strength of the resulting molded article, in particular, the bending strength of the weld portion was poor.

Comparative example 2 is an example in which no carbon paper surface-treated with a water-soluble resin having hydroxy groups was used as the carbon-fiber-reinforcing material, and it was ascertained that the bending strength was insufficient, the standard deviation of the bending strength was large, and variations were significant.

## Claims

1. A molding material for thermocompression molding comprising a resin composition (A) and a carbon-fiber-reinforcing material (B), wherein the resin composition (A) contains a poly(meth)acrylate compound (a1) having hydroxy groups, a radical-polymerizable diluent (a2), a polyisocyanate compound (a3), a styrene-based elastomer (a4) having unsaturated double bonds, and a polymerization initiator (a5); a content of the styrene-based elastomer (a4) having unsaturated double bonds in the resin composition (A) is within a range of 0.1 to 3.0 parts by mass relative to 100 parts by mass of a total amount of the poly(meth)acrylate compound (a1) having hydroxy groups, the radical-polymerizable diluent (a2), and the polyisocyanate compound (a3); and the carbon-fiber-reinforcing material (B) is carbon paper surface-treated with a water-soluble resin (b1) having hydroxy groups.

2. The molding material for thermocompression molding according to Claim 1, wherein the content of the water-soluble resin (b1) in the carbon-fiber-reinforcing material (B) is within the range of 1% to 15% by mass.

3. The molding material for thermocompression molding according to Claim 1 or Claim 2, wherein the molar ratio (NCO/OH) of isocyanate groups (NCO) in the polyisocyanate compound (a3) to hydroxy groups (OH) in the poly(meth)acrylate compound having hydroxy groups (a1) is within the range of 0.1 to 1.

4. A molded article produced by using the molding material for thermocompression molding according to any one of Claims 1 to 3.

5. A method for producing a molded article comprising the step of thermocompression-molding the molding material for thermocompression molding according to any one of Claims 1 to 3 in a mold at 110°C to 180°C.

## Patentansprüche

1. Formmaterial zum Thermokompressionsformen, umfassend eine Harzzusammensetzung (A) und ein Kohlenstofffaser-Verstärkungsmaterial (B), wobei die Harzzusammensetzung (A) eine Poly(meth)acrylatverbindung (a1) mit Hydroxylgruppen, ein radikalisch polymerisierbares Verdünnungsmittel (a2), eine Polyisocyanatverbindung (a3), ein Elastomer auf Styrolbasis (a4) mit ungesättigten Doppelbindungen und einen Polymerisationsinitiator (a5) enthält; ein Gehalt des Elastomers auf Styrolbasis (a4) mit ungesättigten Doppelbindungen in der Harzzusammensetzung (A) innerhalb eines Bereichs von 0,1 bis 3,0 Massenteilen liegt, bezogen auf 100 Massenteile einer Gesamtmenge der Poly(meth)acrylatverbindung (a1) mit Hydroxylgruppen, des radikalisch polymerisierbaren Verdünnungsmittels (a2) und der Polyisocyanatverbindung (a3); und das Kohlenstofffaser-Verstärkungsmaterial (B) Kohlepapier ist, das mit einem wasserlöslichen Harz (b1) mit Hydroxylgruppen oberflächenbehandelt wurde.

2. Formmaterial zum Thermokompressionsformen nach Anspruch 1, wobei der Gehalt des wasserlöslichen Harzes (b1) in dem Kohlenstofffaser-Verstärkungsmaterial (B) im Bereich von 1 bis 15 Massen-% liegt.

3. Formmaterial zum Thermokompressionsformen nach Anspruch 1 oder Anspruch 2, wobei das Molverhältnis (NCO/OH) von Isocyanatgruppen (NCO) in der Polyisocyanatverbindung (a3) zu Hydroxylgruppen (OH) in der Poly(meth)acrylatverbindung mit Hydroxylgruppen (a1) im Bereich von 0,1 bis 1 liegt.

4. Geformtes Produkt, hergestellt unter Verwendung des Formmaterials zum Thermokompressionsformen nach einem der Ansprüche 1 bis 3.

5. Verfahren zur Herstellung eines geformten Produkts, umfassend den Schritt des Thermokompressionsformens des Formmaterials zum Thermokompressionsformen nach einem der Ansprüche 1 bis 3 in einer Form bei 110°C bis 180°C.

## Revendications

1. Matériau de moulage pour moulage par thermocompression comprenant une composition de résine (A) et un matériau de renforcement en fibres de carbone (B), dans lequel la composition de résine (A) contient un composé de poly(méth)acrylate (a1) présentant des groupes hydroxy, un diluant polymérisable par voie radicalaire (a2), un composé de polyisocyanate (a3), un élastomère à base de styrène (a4) présentant des doubles liaisons insaturées, et un initiateur de polymérisation (a5) ; une teneur de l'élastomère à base de styrène (a4) présentant des doubles liaisons insaturées dans la composition de résine (A) est dans une plage de 0,1 à 3,0 parties en masse par rapport à 100 parties en masse d'une quantité totale du composé de poly(méth)acrylate (a1) présentant des groupes hydroxy, du diluant polymérisable par voie radicalaire (a2), et du composé de polyisocyanate (a3) ; et le matériau de renforcement en fibres de carbone (B) est un papier carbone traité en surface avec une résine hydrosoluble (b1) présentant des groupes hydroxy.

2. Matériau de moulage pour moulage par thermocompression selon la revendication 1, dans lequel la teneur en résine hydrosoluble (b1) dans le matériau de renforcement en fibres de carbone (B) est dans la plage de 1 % à 15 % en masse.

3. Matériau de moulage pour moulage par thermocompression selon la revendication 1 ou la revendication 2, dans lequel le rapport molaire (NCO/OH) des groupes isocyanate (NCO) dans le composé de polyisocyanate (a3) par rapport aux groupes hydroxy (OH) dans le composé de poly(méth)acrylate présentant des groupes hydroxy (a1) est dans la plage de 0,1 à 1.

4. Article moulé produit en utilisant le matériau de moulage pour moulage par thermocompression selon l'une quelconque des revendications 1 à 3.

5. Procédé de production d'un article moulé comprenant l'étape de moulage par thermocompression du matériau de moulage pour moulage par thermocompression selon l'une quelconque des revendications 1 à 3 dans un moule à 110 °C à 180 °C.
